Europäisches Patentamt

(19) **European Patent Office**

**Office européen des brevets**

(11) Publication number: **0 030 340**
**B1**

(12) # EUROPEAN PATENT SPECIFICATION

(45) Date of publication of patent specification: **15.02.84**

(21) Application number: **80107455.0**

(22) Date of filing: **28.11.80**

(51) Int. Cl.³: **C 03 B 23/03,**
**C 03 B 27/04,**
**C 03 B 35/20, C 03 B 35/16**

(54) **Apparatus for bending and tempering glass sheets, especially thin sheets.**

(30) Priority: **07.12.79 IT 2796779**

(43) Date of publication of application:
**17.06.81 Bulletin 81/24**

(45) Publication of the grant of the patent:
**15.02.84 Bulletin 84/7**

(84) Designated Contracting States:
**BE DE FR GB LU NL**

(56) References cited:
**DE - A - 2 400 296**
**FR - A - 1 474 251**
**FR - A - 2 046 790**
**LU - A - 65 146**
**US - A - 3 338 695**
**US - A - 3 607 200**
**US - A - 3 684 473**
**US - A - 4 092 141**
**US - A - 4 204 853**

(73) Proprietor: **Societa Italiana Vetro - SIV - S.P.A**
**I-66050 San Salvo (Chieti) (IT)**

(72) Inventor: **Paudice, Ciro**
**Corso Nuova Italia, 24**
**I-66054 Vasto (IT)**
Inventor: **Sassanelli, Vitantonio**
**Corso Lazzini, 201**
**I-66054 Vasto (IT)**
Inventor: **Di Nocco, Dino**
**D.G. Rossetti, 7/A**
**I-66054 Vasto (IT)**
Inventor: **Pracilio, Francesco**
**Corso Mazzini, 288**
**I-66054 Vasto (IT)**
Inventor: **Casa, Nicolò**
**Madonna dei 7 Dolori**
**I-66054 Vasto (IT)**

(74) Representative: **Jarach, Angelalberto, Dr. Ing.**
**Ingg. Guzzi, Ravizza & C. Via Broletto, 39**
**I-20121 Milano (IT)**

Courier Press, Leamington Spa, England.

# Apparatus for bending and tempering glass sheets, especially thin sheets

The present invention relates to the production of curved and tempered (toughened) glass, especially thin sheets.

Such products are frequently used as windows for vehicles in general, more especially for automobiles.

This application requires that the windows be accurately made, both as regards the required dimensions and tolerances of curvature, as well as the configuration to correspond to the general shape of the vehicle body.

Moreover, it is necessary that the visibility through such windows should not be impaired by optical distortions or by flaws in the glass.

As is well known, tempered glass sheets, especially those used in the automobile industry, can be manufactured by horizontal machines which permit high outputs.

In these machines, each glass sheet is conveyed horizontally by a roller conveyor during the consecutive heating, forming (if required) and tempering phases.

In the case of curved glass sheets, these sheets are collected at the output of a forming press which forms them into the required shape.

After the forming operation, the piece leaves the forming press and passes on to the tempering zone via a roller conveyor.

In order for a piece to be efficiently tempered, it must still retain a certain degree of plasticity.

This plasticity, which is an essential conditions for tempering, inevitably leads to deformation of the shape previously assumed by the glass when submitted to treatment in the forming press.

Causes of deformation are essentially as follows:

a) the glass' own weight
b) inertia of the glass sheet
c) action of the first blasts of hot air in the tempering zone
d) any asymmetrical cooling between the upper and lower sides of the glass sheet.

It should be noted that the thinner is the glass sheet, the greater is the risk of deformation, since, whilst it is true that the weight and inertia decrease in proportion with the decrease in thickness of the glass sheet, it is also true that resistance to deformation decreases more or less with the cube of the thickness of the glass sheet.

The deformation due to the hot blast of air in tempering is also very marked.

During recent years, much commercial importance has been placed on thinner and thinner curved tempered glass sheets, with thicknesses passing from 5—6.5 mm down to 2.5—4 mm.

Consequently, a bending process such as that described above in which the piece travels on a roller conveyor, is particularly affected by the decrease in thickness since the resistance to deformation decreases more or less with the cube of the thickness.

The increase of blasts of hot air for tempering which is necessary on account of the higher temperature gradient required by the thinner glass sheets contributes, in turn, to the lower structural resistance, thereby making it difficult to control the shape of the product which, after forming, is still in the plastic state.

From the prior art are well known many processes for bending and tempering thin glass sheets, among which are particularly important the patents:

— FR 1.474.251 (Libbey-Owens-Ford)
— U.S.A. 3.684.473 (Ritter), disclosing an apparatus according to the prior art portion of claim 1
— FR 2.046.790 (Permaglass)

1) In some known processes one takes advantage of apparatus in which the glass sheet, under the tempering blowers, is supported by a forming ring, and the conveying of the sheet takes place on a gaseous bed: (see Patents FR 2.046.790 Permaglass—U.S.A. 3.607.200 McMaster and DE 2.400.296 P.P.G.).

2) In other processes instead one takes advantage of apparatus in which the glass sheet is conveyed on rolls: (see Patents FR 1.474.251 Libbey-Owens-Ford—U.S.A. 2.684.473 Ritter—LU 65.146 · Libbey-Owens-Ford—U.S.A. 3.338.695 Ritter—U.S.A. 4.092.141 Frank. '

The Applicant makes use of a known process on an apparatus in which the conveying of the sheet takes place through rolls in all their working phases and precisely through roll sets ·formed by a fixed and an interchangeable part (which was already been provided only in the U.S.A. Patent 3.338.695 Ritter).

In the latter patent the rolls (148, 149) are already provided side by side in two dimensions with complementary widths utilizable according to the glass sheet to be produced.

Such rolls are indeed suitable for supporting and conveying the glass sheet from the tempering zone to the forming zone, conforming to the form of the sheet to be bent, but they are constrained to the conveying plane at their ends (see 92').

Therefore the forming ring (145, 146) is constrained, in its downward motion, by the presence of the supporting axles of the rolls outside said ring.

On the contrary, according to the present invention there are provided free outer roll ends, so that the forming ring 3 can rise and fall with the glass sheet, without any constraint.

Nevertheless, the outer rolls (B') are still interchangeable according to the dimension of the sheet to be bent, as in the U.S.A. Patent 3.338.695 Ritter.

So, with the apparatus according to the invention sheets can be produced whose bending is greater than in past times, as the supporting ring can fall more, with relation to the plane of the rolls, than it was possible before (see U.S.A. Patent 3.338.695 Ritter).

The release of the forming and supporting ring of the glass sheet from the rolls makes it possible for said ring to perform in the apparatus a continuous movement for many working cycles shortening the working times.

Hence the Applicant has devised a bending and tempering appratus for the glass piece which is still highly plastic when it emerges from the furnace, in order to safeguard both the shape within the required tolerances, and the optical properties of the glass as well as its desired degree of toughness and which enables the production of strongly bent sheets with different configurations and dimensions.

The present invention relates effectively to an apparatus for bending and tempering glass sheets, and especially thin sheets comprising

a) a horizontal furnace for heating the glass up to its softening temperature,
b) means for forming the sheets,
c) tempering nozzles,
d) means for supporting and conveying the sheet in the horizontal direction, these means consisting in the heating phase of rolls, in the forming and in discharge zones of further rolls and during the forming and tempering phases of a ring supported by a special frame which contains it,
e) means for supporting and conveying the frame with integral forming ring horizontally through the consecutive phases of the work cycle, and moreover
f) means provided for causing a vertical rise and fall movement of the frame both in the forming zone and in the sheet discharge zone, the latter following the tempering zone,

characterized in that the rolls for conveying the glass sheet in the horizontal direction provided in the forming and discharge zones consist each of a central section of constant length, and two cantilevered side sections whose length can be modified to suit production requirements, that is to say, they can be adapted to the required glass sheet dimensions.

A suitable embodiment of the invention is characterized in that connection means are also provided between ring and frame and the latter rests on traverse small bases resting in turn on two vertically movable tracks and so that it can, by rising, pass above the rolls, and moreover in that besides the supporting and conveying means, other similar means overlying the former ones are provided and in the upper tempering nozzle section a passage way or chamber is suitably designed to allow the frame and forming ring, as well as their horizontal conveying means to pass through it in the horizontal return direction.

The accompanying drawings, which are to be considered as an explication of the principles of the invention and are not intended to limit it, illustrate a preferred embodiment of the apparatus in accordance with the invention.

In the drawings:

Figure 1 is an assembly view of the apparatus;

Figure 2 is a cross sectional view of said apparatus taken along the lines II—II of Figure 1;

Figure 3 is a plan view of the apparatus itself.

In the following description, the longitudinal direction is considered to be that parallel to the direction of movement of the glass sheet, the cross direction, the one perpendicular to it, and the vertical one, the one normally taken as being vertical.

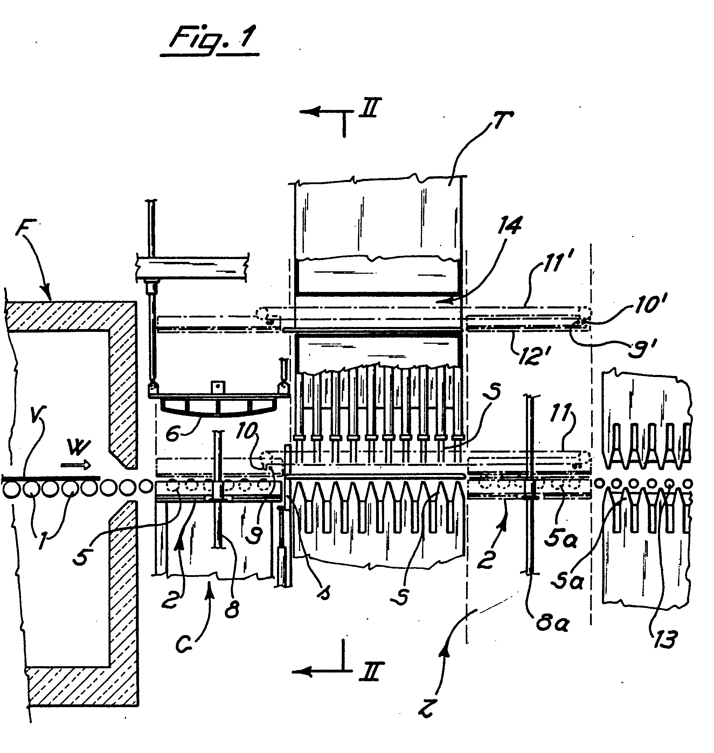

As can be seen from the drawing (Fig. 1), the glass sheet V, which has been previously heated to the softening point in furnace F is conveyed by rolls 1 in the direction of arrow W until it reaches frame 2, whereupon it is rested on other rolls 5.

Said frame 2 can be made of any suitable material provided it has good resistance to heat and low specific weight.

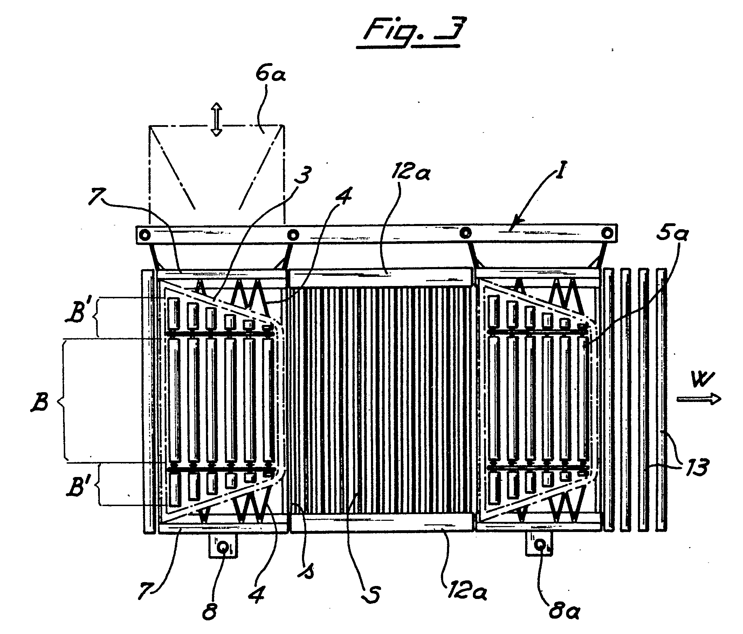

The frame supports, in turn (Fig. 3), the actual forming ring 3.

The connections 4 between forming ring 3 and frame 2 are designed so as to permit all the necessary adjustments required for setting up the forming phase of glass sheet V.

Once the glass sheet V is placed on the forming ring 3, frame 2 passes beyond conveyor rolls 5 and is raised upwards, thereby permitting (with the assistance, if required of male member 6 located above) glass sheet V to be formed according to the desired degree of curvature.

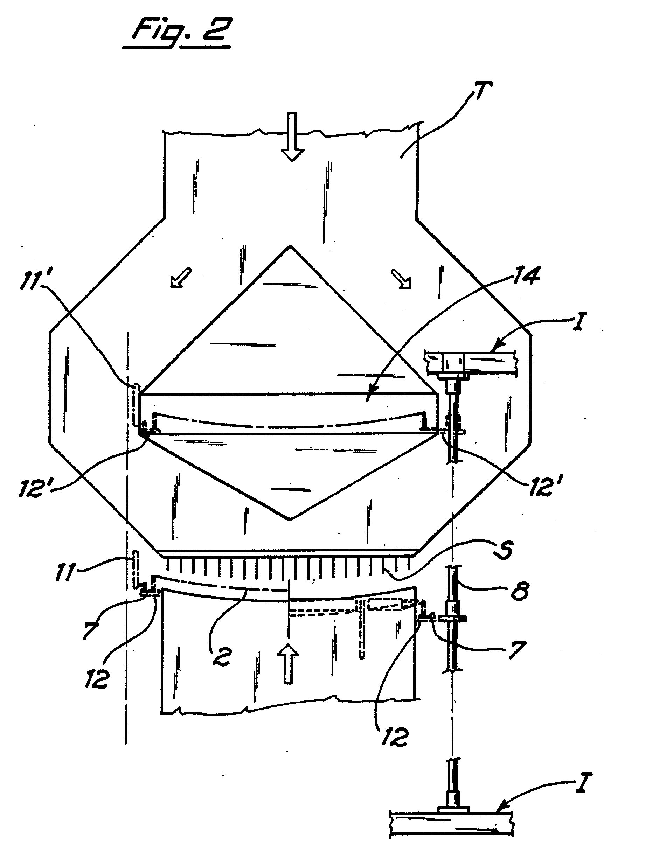

The forming frame 2 is rested, in actual practice, (Fig. 2) on two cross blocks 7 which, in turn, rest upon wo vertically movable tracks 12 which impart a rise and fall movement to frame 2.

Said vertical movement is preferably carried out through a device 8 consisting of a rotating screw with moving screw nut.

After the forming phase, the frame 2, including integral forming ring 3 and glass sheet V which is by now formed but still in the plastic state, is coupled to a pin 9 of a tooth 10 which, when moved by a chain 11, causes frame 2 to travel on another pair of fixed tracks 12a.

Chain movement 11 is powered by electric stepping motors (not shown in the Figure).

Frame 2 moves along tracks 12a and passes nozzles S of the tempering zone, after which, the gase separating the forming and tempering zones, is automatically lowered.

The speed at which frame 2 travels under nozzles S of the tempering zone, depends on the temperature of glass sheets V, on the air flow rate of nozzles S, and on the required degree of tempering.

Air blowing pressure in the tempering zone is around 1500 to 2000 mm $H_2O$, while the rate of travel under nozzles S is about 0.07 to 0.15 m/s.

Glass sheet V therefore remains securely attached to frame 2 and forming ring 3; hence it is submitted in a most original way to an accurate vibration-free movement during the delicate holding phase of the mould at high temperature.

In this way, the action of the aerodynamic forces during tempering and the less adequate holding means, such as the conveyor rolls, are prevented from causing irregular and unexpected deformations, or at least deformations difficult to control.

As a result, glass sheet V is hardened and consolidated through the heat treatment into the previously assumed shape.

After leaving nozzles S of the tempering zone, frame 2 loaded with glass sheet V travels towards the glass sheet discharge zone Z.

When the cooling nozzles Sa are reached, frame 2 is lowered under the level of conveyor rolls 5a through vertical moving device 8a which is similar to device 8 in the forming zone C.

The as-formed and tempered glass sheet V is released, during the downwards movement of frame 2, on to the rolls 5a.

These latter items are arranged to deliver glass sheet V to other rolls 13 on which it is conveyed through cooling nozzles section Sa.

Finally the finished product is discharged from the machine.

Average duration of the above described work cycle is from 4 to 5 seconds; hence it can well meet the required output rhythm and productivity.

Frame 2, after discharging the glass sheet, is then raised automatically until reaching the same level as track 12' ready for its return to the inlet of furnace F.

A passageway 14 in the upper nozzle section S of the tempering zone allows the frame 2 to pass through during its return travel.

Air supply pipes T are adequately dimensioned in this zone so as not to allow the amount and pressure of air during the tempering phase to decrease.

The return traversing system for frame 2 is identical to that described previously for the forward traverse, with analogous members, that is, pin 9', tooth 10' and chain 11'.

When frame 2 reaches the inlet of furnace F it is automatically lowered down to the lower level, that of conveyor rolls 5, ready for the next work cycle.

In order to allow lowering of frame 2 into the loading position, male member 6 is provided with a horizontal traversing device which traverses it to position 6a thereby retracting it from the path of said frame 2 when the latter is on its way to the inlet of furnace F.

The same device traverses male member 6 back to its vertical position on frame 2 ready for the forming operation.

When frame 2 is positioned ready to pick up glass sheet V it is actually (Fig. 1) under conveyor rolls 5.

The latter conveyor rolls 5 (Fig. 3) are likewise arranged in a special way, that is, in distinct sections, a central section B of constant length, and two side sections B' whose length varies according to requirements.

**Claims**

1. Apparatus for bending and tempering glass sheets, and especially thin sheets comprising

a) a horizontal furnace (F) for heating the glass up to its softening temperature,
b) means (6) for forming the sheets (V),
c) tempering nozzles (S),
d) means for supporting and conveying the sheet (V) in the horizontal direction, these means consisting in the heating phase of rolls (1), in the forming and in discharge zones of further rolls (5, 5a) and during the forming and tempering phases of a ring (3) supported by a special frame (2) which contains it,
e) means (9, 10, 11) for supporting and conveying the frame (2) with integral forming ring (3) horizontallly through the consecutive phases of the work cycle, and moreover
f) means (8, 8a) provided for causing a vertical rise and fall movement of the frame (2) both in the forming zone and in the sheet (V) discharge zone, the latter following the tempering zone,

characterized in that the rolls (5 and 5a) for conveying the glass sheet in the horizontal direction provided in the forming and discharge zones consist each of a central section (B) of constant length, and two cantilevered side sections (B') whose length can be modified to suit production requirements, that is to say, they can be adapted to the required glass sheet dimensions.

2. Apparatus as claimed in claim 1, characterized moreover in that connection means (4) are also provided between ring (3) and frame (2) and the latter rests on transverse small bases (7) resting in turn on two vertically movable tracks (12) and so that it can, by rising, pass above the rolls (5 and 5a).

3. Apparatus as claimed in claim 1, characterized moveover in that, besides the supporting and conveying means (9, 10, 11), other similar means (9', 10', 11') overlying the former ones are provided and in the upper tempering nozzle section (S) a passage way or chamber (14) is suitably designed to allow the frame (2) and forming ring (3), as well as their horizontal driving means (9', 10', 11'), to pass through it in the horizontal return direction.

## Patentansprüche

1. Vorrichtung zum Biegen und Anlassen von Glasscheiben, insbesondere von dünnen Glasscheiben, mit

a) einem waagerechten Ofen (F) zum Erhitzen des Glases bis zu seiner Erweichungstemperatur,

b) einer Einrichtung (6) zum Formen der Scheiben (V),

c) Abschreckdüsen (S),

d) Einrichtungen zum Stützen und Transportieren der Scheibe (V) in waagerechter Richtung, welche in der Erhitzungsphase aus Rollen (1), in der Formungs- und in der Austragszone aus weiteren Rollen (5, 5a) und während der Formungs- und Abschreckphasen aus einem von einem ihn enthaltenden und tragenden speziellen Rahmen (2) getragenen Ring (3) bestehen,

e) Einrichtungen (9, 10, 11) zum Stützen und Transportieren des Rahmens (2) mit dem fest damit verbundenen Ring (3) in waagerechter Richtung durch die aufeinander folgenden Phasen des Arbeitszyklus, und ferner mit

f) Einrichtungen (8, 8a) zum Hervorbringen einer senkrechten Hebe- und Senkbewegung des Rahmens (2) sowohl in der Formungszone als auch in der auf die Abschreckzone folgenden Scheiben-Austragszone,

dadurch gekennzeichnet, daß die in der Formungs- sowie in der Austragszone vorgesehenen Rollen (5 und 5a) für den Transport der Scheiben in waagerecter Richtung jeweils aus einem mittleren Abschnitt (B) von konstanter Länge und zwei freitragenden seitlichen Abschnitten (B') bestehen, deren Länge zur Anpassung an die Erfordernisse der Produktion veränderbar ist, d.h. auf die jeweiligen Abmessungen der Glasscheiben abstimmbar ist.

2. Vorrichtung nach Anspruch 1, ferner dadurch gekennzeichnet, daß Verbindungseinrichtungen (4) zwischen dem Ring (3) und dem Rahmen (2) vorgesehen sind und daß der Letztere auf kleinen Grundtraversen (7) ruht, welche ihrerseits auf zwei senkrecht bewegbaren Schienen (12) ruhen, so daß sie durch Anheneń über die Rollen (5, 5a) hinweg bewegbar sind.

3. Vorrichtung nach Anspruch 1, ferner dadurch gekennzeichnet, daß zusätzlich zu den Stütz- und Transporteinrichtungen (9, 10, 11), weitere gleichartige, die vorstehend Genannten überlagernde Einrichtungen (9', 10', 11') vorgesehen sind und daß im oberen Abschreckdüsenabschnitt (S) ein Durchlaß oder eine Kammer (14) geformt ist, durch welche der Rahmen (2) mit dem Formring (3) sowie die Einrichtungen (9', 10', 11') für den horizontalen Antrieb desselben in der waagerechten Rückführrichtung hindurchbewegbar sind.

## Revendications

1. Appareil pour cintrer et tremper des plaques de verre, et en particulier des plaques minces, comprenant

a) un four horizontal (F) pour chauffer le verre jusqu'à sa température de ramollissement,

b) un moyen (6) pour conformer les plaques (V),

c) des buses de trempage (S),

d) des moyens pour supporter et convoyer la plaque (V) dans la direction horizontale, ces moyens consistant dans la phase de chauffage en des rouleaux (1), dans les zones de formage et de délivrance en d'autres rouleaux (5, 5a) et pendant les phases de formage et de trempage en un anneau (3) supporté par un châssis spécial (2) qui le renferme,

e) des moyens (9, 10, 11) pour supporter en convoyer horizontalement le châssis (2), avec l'anneau (3) qui en est solidaire, à travers les phases successives du cycle de travail, et en outre

f) des moyens (8, 8a) prévus pour provoquer un levage et un abaissement du châssis (2) dans le sens vertical à la fois dans la zone de formage et dans la zone de délivrance de la plaque (V), cette zone succédant à la zone de trempage,

caractérisé par le fait que les rouleaux (5 et 5a) pour acheminer la plaque de verre dans la direction horizontale, prévus dans les zones de formage et de délivrance, consistent chacun en un tronçon central (B) de longueur constante, et en deux tronçons latéraux (B') en porte-à-faux dont la longueur peut être modifiée pour s'adapter à des exigences de production, c'est-à-dire qu'ils peuvent être adaptés aux dimensions nécessaires de la plaque de verre.

2. Appareil selon la revendication 1, caractérisé en outre par le fait que des organes de liaison (4) sont également prévus entre l'anneau (3) et le châssis (2) et ce dernier est en appui sur de petites bases transversales (7) reposant à leur tour sur deux pistes (12) mobiles verticalement et de telle sorte qu'il puisse, par soulèvement, passer au-dessus des rouleaux (5 et 5a).

3. Appareil selon la revendication 1, caractérisé par le fait que, en plus des moyens de support et de convoyage (9, 10, 11), d'autres moyens analogues (9', 10', 11') sus-jacents aux premiers sont prévus et, dans la section supérieure (S) à buses de trempage, un passage ou chambre (14) est destiné de manière adéquate à permettre au châssis (2) et à l'anneau de formage (3), ainsi qu'à leurs moyens d'entraînement horizontal (9', 10', 11'), de le traverser dans la direction horizontale de retour.

## Fig. 1

Fig. 2

Fig. 3